# FASCICULE DE BREVET EUROPEEN

(11) **EP 3 214 048 B1**
(45) Date de publication et mention de la délivrance du brevet: **21.11.2018**
(21) Numéro de dépôt: 17158929.4
(22) Date de dépôt: 02.03.2017
(51) Int. Cl.: C02F 3/04, C02F 3/10, C02F 3/30

(54) **DISPOSITIF DE TRAITEMENT D'EAU OU D'ASSAINISSEMENT D'EAUX USÉES**
VORRICHTUNG ZUR WASSERAUFBEREITUNG ODER ABWASSERAUFBEREITUNG
INSTALLATION FOR TREATING WATER OR WASTEWATER

(30) Priorité: 03.03.2016 BE 201605160
(43) Date de publication de la demande: 06.09.2017
(73) Titulaire: EPUR S.A., 4460 Grace-Hollogne (BE)
(72) Inventeur: HARTENSTEIN, Nadine, 4100 SERAING (BE)
(74) Mandataire: Office Freylinger

(56) Documents cités:
- CN-U- 201 780 224
- FR-A1- 2 750 417
- US-A- 5 580 453

## Description

### Domaine technique

La présente invention concerne le traitement de l'eau (en vue de l'obtention d'eau potable ou non-potable) et l'assainissement (épuration) des eaux usées. Plus particulièrement, l'invention concerne des dispositifs de traitement d'eau ou d'assainissement des eaux usées à cuve(s), notamment des stations d'épuration des eaux usées domestiques, agricoles ou industrielles.

### Etat de la technique

Il existe un grand nombre de dispositifs de traitement d'eau ou d'assainissement des eaux usées. Ces dispositifs comprennent au moins une cuve avec un ou plusieurs compartiments intégrant des fonctions différentes.

US 5 580 453 A divulgue un appareil de filtration d'eaux usées comprenant un boîtier de filtre s'étendant verticalement ayant une pluralité de tubes filtrants disposés à l'intérieur. Au moins l'un des tubes de filtration présente une ouverture dans son extrémité inférieure et est fermé à sa partie supérieure, les eaux usées devant être filtrées s'écoulant à l'intérieur du tube filtrant et sortant par les ouvertures ménagées dans les parois du tube filtrant vers l'intérieur du boîtier du filtre. Un second tube de filtre est pourvu d'une extrémité inférieure fermée et d'une extrémité de sortie ouverte en communication d'écoulement avec une sortie de décharge provenant du boîtier de filtre. Le second tube filtrant est parallèle au premier tube filtrant, l'eau s'écoulant à l'intérieur du boîtier s'écoulant dans le second tube filtrant et s'écoulant vers le haut et hors des ouvertures de l'extrémité supérieure du tube filtrant qui est en communication de flux avec la décharge de sortie du filtre.

CN 201 780 224 U divulgue un dispositif de prétraitement d'échantillon d'eau avec les fonctions de décantation, de filtrage et d'auto-nettoyage. L'invention concerne un dispositif de prétraitement d'analyse de qualité d'eau en ligne comprenant un réservoir de stockage d'eau et un filtre monté à l'intérieur du réservoir d'eau, le réservoir d'eau étant en communication avec un tuyau d'échantillonnage et un tuyau d'évacuation des eaux usées et le filtre en transmission avec un dispositif rotatif peut tourner à l'intérieur du réservoir de stockage d'eau. Le dispositif de prétraitement d'analyse de qualité d'eau en ligne de grande taille est en outre pourvu d'un tuyau d'entrée d'échantillon et d'un tuyau de rinçage arrière; une extrémité du tuyau d'entrée d'échantillon s'étend dans une cavité de filtration à l'intérieur du filtre; l'autre extrémité du tuyau d'entrée d'échantillon est reliée à un dispositif de détection d'échantillon d'eau; une extrémité du tuyau de rinçage arrière s'étend dans la cavité de filtration à l'intérieur du filtre; et l'autre extrémité du tuyau de rinçage arrière est connectée à une source d'eau de nettoyage. Le dispositif de prétraitement d'analyse de qualité de l'eau en ligne présente les avantages suivants: structure simple, fiabilité, durabilité et capacité de traitement efficace des sables, matières en suspension et similaires dans l'eau brute pour éviter tout endommagement du dispositif de détection de la qualité de l'eau, assurant la durée de vie et la structure de détection du dispositif de détection de la qualité de l'eau au maximum.

Certains contrôles et d'une manière générale la maintenance nécessitent l'accès par la trappe de visite. Or l'espace disponible à l'intérieur des dispositifs étant limité, ces opérations sont pénibles et donc peu appréciées des utilisateurs. Or les contrôles réguliers et une maintenance appropriée sont indispensables pour une opération correcte du traitement de l'eau ou l'assainissement des eaux épurées.

### Objet de l'invention

Un objet de la présente invention est par conséquent de proposer des dispositifs de traitement d'eau ou d'assainissement d'eaux usées dont les opérations de contrôle ou de maintenance sont facilitées.

### Description générale de l'invention

Afin de résoudre le problème mentionné ci-dessus, la présente invention propose un dispositif de traitement d'eau ou d'assainissement d'eaux usées comprenant une cuve avec au moins un compartiment, le compartiment comprenant une arrivée des eaux et une évacuation des eaux épurées, l'évacuation des eaux épurées étant pourvue d'un filtre pour retenir les matières résiduaires dans le compartiment. Le dispositif selon l'invention comprend en outre un tube vertical agencé dans le compartiment, l'extrémité inférieure du tube vertical présentant au moins une ouverture à proximité du fond du compartiment et l'extrémité supérieure du tube vertical se trouvant au-dessus du niveau supérieur de la cuve, l'extrémité supérieure du tube vertical étant ainsi accessible de l'extérieur de la cuve (le cas échéant sous une trappe de visite, un couvercle, un bouchon, un clapet, un capuchon, etc.). Selon l'invention, le filtre est disposé de manière amovible à l'intérieur du tube vertical et l'évacuation des eaux épurées est raccordée au tube vertical. Selon l'invention, le filtre comprend une cavité intérieure entourée de milieu filtrant et le dispositif comprend en outre, à l'intérieur du tube vertical, une conduite verticale de prélèvement d'eaux épurées dont l'extrémité ouverte inférieure se trouve à l'intérieur de la cavité intérieure du filtre et dont l'extrémité supérieure ouverte se trouve à hauteur de l'extrémité supérieure du tube vertical accessible de l'extérieur de la cuve.

Le tube vertical sert ainsi d'accès au filtre depuis l'extérieur, permet de vérifier son état et le cas échéant de le sortir pour le nettoyer ou le remplacer. En fonction du type de compartiment dans lequel est placé le tube vertical, l'évacuation des eaux épurées sera placée à une certaine hauteur de la cuve, généralement en haut ou dans le cas d'un réacteur par percolation en bas du compartiment. Comme le tube vertical est raccordé à l'évacuation des eaux, le filtre peut être situé à n'importe quel endroit dans le tube vertical en amont du raccord à l'évacuation. Dans les compartiments à sortie haute, le filtre peut ainsi être placé directement au raccord à l'évacuation, mais une disposition plus bas dans le tube vertical est également envisageable.

Le tube vertical est de préférence cylindrique, mais sa section peut présenter d'autres formes, notamment carrée, rectangulaire, polygonale ou ovale. La dimension de la section du tube est variable en fonction de ses autres fonctions (voir ci-dessous) et dans une certaine mesure de la taille du compartiment. En général, la section est telle qu'elle permette (au moins) l'accès, soit directement, soit au moyen d'un outil allongé approprié, au filtre amovible. Le filtre amovible peut en variante être muni d'une ou de plusieurs barre(s) de levage pour faciliter son retrait et son repositionnement. En pratique la dimension de la section peut se situer entre 75 cm² pour des petites configurations et 10000 cm² ou plus pour des installations de taille plus importantes, généralement entre 100 cm² et 1000 cm².

Le tube vertical peut en principe être placé à n'importe quel endroit à l'intérieur du compartiment, libre ou contre l'une des parois du compartiment, du moment qu'il peut être raccordé à l'évacuation des eaux épurées. Comme la partie supérieure du tube vertical doit être accessible de l'extérieur de la cuve, le tube vertical est soit accessible par la trappe de visite de la cuve et donc placé en-dessous de celle-ci, soit directement accessible de l'extérieur, auquel cas le tube vertical passe au travers du plafond de la cuve. De préférence, l'extrémité supérieure du tube vertical est munie d'un moyen de fermeture étanche à l'air ou non par tout moyen approprié, notamment un couvercle, un bouchon, un clapet ou un capuchon, permettant l'accès à l'intérieur du tube vertical en cas de besoin. La fermeture peut être plus ou moins étanche, si utile ou nécessaire.

Le tube vertical est de préférence posé sur ou fixé au fond du compartiment. Pour permettre l'écoulement de l'eau il comporte alors des entretoises ou espaceurs en bout de tube formant un espace de circulation sous le tube vertical. En variante ou en plus le tube peut également être muni d'ouvertures à proximité de l'extrémité inférieure, avantageusement des ouvertures sur toute la périphérie du tube vertical, de préférence sous la forme de crépine.

Comme mentionné ci-dessus, le dispositif comprend en outre, à l'intérieur du tube vertical, une conduite verticale de prélèvement d'eaux épurées dont extrémité supérieure ouverte se trouve à hauteur de l'extrémité supérieure du tube vertical. Une telle conduite de prélèvement permet ainsi de prélever des échantillons d'eau en vue d'en apprécier la propreté ou pour analyse de sa qualité. Dans le dispositif de traitement d'eau ou d'assainissement d'eaux usées selon l'invention, le filtre comprend une cavité intérieure entourée de milieu filtrant et l'extrémité ouverte inférieure de la conduite de prélèvement se trouve à l'intérieur de la cavité intérieure du filtre. La cavité intérieure assure donc la fonction de chambre de prélèvement. Un avantage important de cette configuration est que les mesures de prélèvement sont plus reproductibles même pour un opérateur moins expérimenté. En effet, l'eau prélevée à cet endroit ne peut pas être contaminée par des dépôts de matières sédimentées par exemple au fond de la cuve et qui seraient remis en suspension par une agitation locale de l'eau lors du prélèvement. De plus, le prélèvement à l'intérieur de la cavité du filtre permet d'anticiper la nécessité de nettoyage du filtre.

La conduite de prélèvement peut aussi être configurée pour pouvoir en plus prélever des échantillons en amont ou en aval du filtre dans le sens de l'écoulement des eaux. Il est également envisagé de prévoir des conduites supplémentaires pour ces prélèvements en amont et / ou en aval du filtre. L'extrémité supérieure ouverte de la ou des conduite(s) de prélèvement peut être fermée par un couvercle, un bouchon, un clapet ou un capuchon si nécessaire.

En général, il est utile de savoir si le niveau d'eau à l'intérieur de la cuve monte anormalement, ce qui est généralement le signe d'un bouchage, notamment le colmatage du filtre. Par conséquent, des variantes avantageuses du dispositif de traitement d'eau ou d'assainissement d'eaux usées comprennent en outre, à l'intérieur du tube vertical, une alarme comprenant une tige verticale pourvue d'un flotteur, la tige verticale étant adaptée pour se déplacer verticalement en fonction du niveau hydraulique dans le tube vertical. Si nécessaire ou utile, la tige verticale peut être agencée à l'intérieur d'une conduite de protection ou cage de positionnement. Ainsi lorsque le niveau des eaux monte trop dans le tube vertical, la tige verticale monte et devient visible en surface/de l'extérieur du dispositif et/ou peut déclencher un voyant passif ou même un interrupteur relié à une alarme électrique. visuelle ou sonore ; elle permet d'alerter les bouchages soit du dispositif de traitement, soit le bouchage du filtre, soit le bouchage de l'évacuation des eaux en aval de la station d'épuration, soit individuellement, soit l'un et / ou l'autre simultanément.

Le tube vertical peut intégrer d'autres fonctions. Certaines variantes de l'invention prévoient un moyen de vidange ou de relevage à l'intérieur du tube vertical, par exemple en cas de bouchage ou de colmatage du filtre ou simplement pour la vidange en cas de travaux de maintenance dans le compartiment. Ainsi, le tube vertical peut contenir une conduite raccordable à une pompe extérieure. En variante, notamment dans le cas de hauteur de cuve plus importantes, une pompe de relevage peut être soit montée à l'intérieur du tube vertical, soit elle peut être introduite en cas de besoin.

Dans certaines variantes de l'invention, le tube vertical peut également servir de prise d'air pour la ventilation du compartiment ou de la cuve ou des dispositifs de traitement d'eau ou d'assainissement des eaux usées. Dans ces cas l'extrémité supérieure du tube vertical n'est pas étanche à l'air et a accès à l'atmosphère libre. De plus, le tube vertical comprend alors des ouvertures supplémentaires à l'intérieur de la cuve ou du compartiment au-dessus du niveau de l'eau. Dans le cas d'un compartiment à percolation (où l'évacuation des eaux se fait par le bas du compartiment), le tube vertical peut en variante ou en outre comprendre des ouvertures à différents niveaux, avantageusement sur toute la périphérique, par exemple sous la forme de crépine, de préférence en combinaison avec un lit microbiologique à plusieurs couches interrompues par un ou plusieurs zones d'oxygénation intermédiaire(s).

Dans un aspect supplémentaire, l'invention concerne également un procédé de fabrication de dispositifs de traitement d'eau ou d'assainissement d'eaux usées tel que décrit ici, comprenant l'intégration d'un tube vertical pourvu d'un filtre amovible tel que défini ici dans un compartiment d'une cuve.

Dans encore un aspect supplémentaire, l'invention concerne également un procédé de contrôle ou de maintenance du dispositif de traitement d'eau ou d'assainissement d'eaux usées tel que décrit ici, notamment de contrôle ou de remplacement du filtre amovible, de prélèvement d'échantillons, de vidange du compartiment, etc.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
Fig. 1: est une coupe transversale d'un mode réalisation préféré, montrant une partie d'un dispositif d'assainissement des eaux usées, plus particulièrement la partie supérieure du tube vertical;
Fig. 2: est une coupe transversale d'un mode réalisation préféré, montrant une partie d'un dispositif d'assainissement des eaux usées, plus particulièrement la partie inférieure du tube vertical; et
Fig. 3: est une coupe transversale partielle d'un mode réalisation préféré, montrant une partie d'un dispositif d'assainissement des eaux usées, plus particulièrement la partie intermédiaire du tube vertical.

### Description d'une exécution préférée

Comme indiqué ci-dessus, les dispositifs selon l'invention peuvent être mis en oeuvre pour le traitement de l'eau (potable ou non, eaux pluviales notamment) ou encore pour l'assainissement (épuration) des eaux usées. Indépendamment de la finalité, un compartiment peut être opéré en immersion (entrée et sortie hydrauliques hautes) ou en ruissellement ou percolation (entrée hydraulique haute et sortie hydraulique basse). L'exemple ci-dessous est de ce dernier type afin d'illustrer au mieux des fonctions possibles du tube vertical intégré au dispositif. Néanmoins, l'homme de métier verra immédiatement l'utilité pour des compartiments opérés en immersion ou autre.

Un dispositif particulièrement avantageux selon l'invention peut concerner en particulier un dispositif d'assainissement passif (on entend par « passif » un dispositif sans consommation d'énergie pendant le fonctionnement normal hors maintenance) des eaux usées domestiques, agricoles ou industrielles sans consommation d'énergie et de préférence sans apport d'enzymes ou autres substances naturelles ou chimiques de quelque nature que ce soit.

Une variante avantageuse de l'invention comprend un réacteur vertical passif à culture fixée opérée par percolation alternée et séquencée aérobie qui permet une digestion des charges polluantes par une biomasse composée de bactéries (biofilm) qui se fixent naturellement sur les supports inertes naturels et pérennes.

L'organisation du dispositif et les structures des supports permettent d'optimaliser
- l'absorption naturelle de l'O₂ dans l'eau à épurer,
- la mise en contact de la biomasse avec l'air permettant aux bactéries d'absorber et de consommer l'oxygène nécessaire à leur performance de digestion des charges polluantes présentes dans l'eau percolée,
- une parfaite répartition de la charge hydraulique sur les supports par dispersion alternée et séquencée,
- le circuit hydraulique au travers du dispositif,
- le rapport surface biomasse / surface eau usée percolante,
- la pérennité de l'efficacité du dispositif par des supports dimensionnés, calculés et agencés de manière à ne pas se colmater.

L'oxygénation de la biomasse (bactéries, biofilm) se réalise selon deux processus distincts non concomitants
- par transfert de l'oxygène contenu dans l'air à l'eau usée par contact superficiel au cours de la percolation de l'eau au travers du dispositif et
- par absorption de l'oxygène contenu dans l'air présent entre les structures durant les phases intermédiaires de la percolation.

Afin de permettre d'attendre les performances épuratoires souhaitées, le dispositif prend en compte et intègre les paramètres de dimensionnement nécessaires tels que
- la charge hydraulique,
- les différentes charges polluantes organiques et chimiques,
- les charges matières sédimentables,
- les charges matières en suspension,
- la capacité hydraulique en adéquation avec le volume de supports bactériens,
- la vitesse de biodégradabilité,
- le degré de biodégradabilité,
- le temps de rétention de l'eau dans la station d'épuration,
- le temps nécessaire au transfert O₂ pour l'oxygénation de la biomasse,
- les variations de charges polluantes normalisées,
- les variations de charges hydrauliques normalisées,
- les normes de rejets réglementaires.

### Principes généraux d'un mode réalisation avantageux

L'assainissement des eaux usées procède généralement en trois phases, elles-mêmes divisées en phases fonctionnelles secondaires.

### Phase 1 : le prétraitement

Le prétraitement consiste en principe en un stockage des eaux usées brutes avec comme finalité
- de sédimenter les matières solides - elles constituent les boues primaires,
- de mettre en surnageant les surnageants à évacuer telles que graisses, champoings, savons etc. - elles constituent également les boues primaires,
- d'assurer une première digestion / liquéfaction par action bactérienne anaérobie dont le développement est spontané, sans apport d'enzymes ou autres substance de quelle que nature que ce soit,
- d'assurer une préfiltration aux fins d'éviter le transfert de matières solides ou surnageantes vers le réacteur biologique aérobie,
- de présenter une contenance de volume suffisant permettant de réduire la fréquence de vidange nécessaire des sédiments.

### Phase 2 : le traitement aérobie

Le traitement proprement-dit consiste à développer le maximum de bactéries (biomasse) sur des supports spécifiquement adaptés pour permettre de les sédentariser.

La biomasse est mise en situation aérobie, c'est-à-dire en présence d'oxygène, nécessaire à leur métabolisme pour atteindre les performances souhaitées de digestion des charges polluantes.

Pour ce faire, différents principes d'oxygénation sont développés et appliqués dans le dispositif. La biomasse (bactéries) sera alimentée par
- soit l'oxygène dissout dans l'eau percolante,
- soit l'oxygène contenu dans l'air en phase d'absence de percolation,
- soit les deux à la fois,
chaque séquence étant consécutive du transit de l'eau usée au travers des différentes composantes des structures du filtre.

Durant cette phase les charges polluantes sont ainsi digérées jusqu'à atteindre les normes de rejet attendues.

### Phase 3 : la post-filtration

Elle est composée d'un dispositif intégré de filtration des particules résiduelles éventuelles, minéralisées ou non.

Le filtre est composé d'une masse filtrante de nature indifférente de préférence en structures à alvéolaires ouvertes de dimensions adaptées. Il est intégré au tube vertical agencé tel que décrit en supra.

### Description détaillée des phases décrites ci-dessus

La phase 1 relève du principe de la Fosse Toutes Eaux (FTE) classique, autrement appelée également « fosse septique ». La fosse toutes eaux est de préférence équipé de préfiltres destinés à éviter le transfert des matières solides et surnageantes vers le réacteur biologique aérobie.

La séquence « fosse toutes eaux » est
- soit intégrée à la phase de traitement (station d'épuration des eaux mono-cuve),
- soit séparée de la phase de traitement (station d'épuration des eaux multi-cuves).

### Phase 2

### Principe de base - chambre de traitement

L'objectif premier de l'invention est de proposer une solution permettant de faciliter le contrôle et la maintenance du dispositif d'assainissement d'eaux usées dans le présent exemple. De plus, dans l'exemple donné, le dispositif est conçu pour pouvoir se passer de toute consommation d'énergie pendant le fonctionnement normal et dès lors de disposer d'une station d'épuration des eaux dite « passive ».

### Le lit fixe 3

Le dispositif est équipé de structures supports de bactéries (appelé lit fixe) permettant le développement de la biomasse qui les colonise, s'y fixe et s'y développe.

Le lit fixe est de préférence composé de préférence exclusivement de matériaux naturels non biodégradables, inertes, stables et pérennes dans le temps. Les matériaux qui le composent sont généralement de forme grossièrement sphérique ou toute autre forme permettant entre elles une circulation d'air et/ou d'eau. Il peut s'agir de granules d'origine naturelle ou artificielle, minérale ou organique, notamment des granules d'argile expansée, des granules de céramique, de kaolin traité, des billes en matière synthétique, etc.

Les matériaux qui le composent sont de préférence de structure poreuse pour permettre une bonne absorption et une bonne rétention de l'eau dans les structures.

Les matériaux qui le composent sont de préférence rugueux pour permettre une bonne accroche de la biomasse sur les structures et mécaniquement résistants afin d'éviter tout tassement ou écrasement. De manière particulièrement avantageuse, les supports sont des granules d'argile expansée.

Son architecture spécifique apporte les spécificités suivantes :
- exonère de tout risque de colmatage par une granulométrie et une densité adaptée,
- permet une parfaite répartition de l'écoulement de la charge hydraulique au travers des structures par un rapport de vide entre structures adapté,
- permet une bonne accroche de la biomasse par ses structures rugueuses,
- permet une régulation de la charge hydraulique par absorption partielle de l'eau grâce à ses structures poreuses.

L'ensemble de ces dispositions constructives et conceptuelles conduit à une structure globale du dispositif, pérenne et ne nécessitant pas son remplacement à terme.

### La dispersion de l'eau

La dispersion de la charge hydraulique sur le filtre à lit fixe est de préférence réalisée par un auget basculant fonctionnant séquentiellement et alternativement à droite et à gauche, en particulier sur une surface de répartition spécialement adaptée pour permettre une répartition surfacique uniforme.

La surface de répartition peut être caractérisée par exemple par une forme ondulée perforée. Les perforations multiples de la surface de répartition sont préférablement caractérisées par un espacement et un diamètre d'ouverture permettant une bonne répartition de la charge hydraulique. La structure périphérique de la surface de répartition comprend de préférence un relief permettant et générant le retour sur le répartiteur de la charge hydraulique séquentielle non encore percolée lors du passage aller. Les perforations sont idéalement définis par un espacement et un diamètre de perforation permettant une répartition de la charge hydraulique en deux passages séquentiels, l'un aller, l'autre retour.

### L'oxygénation de la biomasse

Outre la présence d'air entre les structures composant le dispositif, l'oxygénation est encore optimalisée par ventilation du filtre à lit fixe par un courant d'air frais traversier obtenu par une ou plusieurs zones d'oxygénation intermédiaires
- au départ d'une tuyauterie d'aspiration par le tube vertical 2,
- en sortie par ventilation haute intégrant la ventilation de la phase anaérobie (prétraitement).

L'oxygénation de l'eau à traiter est ainsi assurée par le transfert naturel de l'O₂ dans l'eau (O₂ dissout).

Pour ce faire, la surface de contact air/eau est calculée en tenant compte des paramètres standards que sont :
- le taux de transfert naturel O₂ dans l'eau aux températures moyennes des eaux en station d'épuration,
   - sans présence de lumière ni UV ; donc en dehors de toute action de phyto-développement,
- le temps de rétention de l'eau minimum nécessaire pour que le transfert O₂ soit réalisé.

La surface de transfert O₂ / eau est multipliée grâce aux phases multiples et complémentaires suivantes :
- une ventilation naturelle consécutive des espaces d'air disponible entre les structures du filtre passif à lit fixe,
- une ventilation de l'eau lors de la dispersion par basculement alterné de l'auget,
- un filtre à lit fixe dont les composantes permettent une présence d'air entre ses structures,
- une ou plusieurs zones d'oxygénation ou de ventilation intermédiaire.

### Phase 3 - Principe de base

La phase 3 consiste à retenir les matières résiduelles éventuelles en aval du dispositif, qu'elles soient minéralisées ou non.

La filière épuratoire par filtre vertical passif à culture fixée à percolation alternée aérobie génère des volumes de matières résiduaires particulièrement faibles. Ces particules sont retenues par et dans la zone de filtration (filtre 51-55)
- constituée d'un filtre à alvéoles ouvertes de densité appropriée,
- disposée en aval du lit fixe,
- située en amont de la tubulure de sortie des eaux traitées.

Le filtre 51-54 est placé dans le tube vertical 2 et est amovible pour permettre son nettoyage et son remplacement éventuel.

Un tube vertical de positionnement du filtre est avantageusement prévu qui peut assurer en plus la fonction de cage de positionnement de l'alarme 91-92 (passive).

### Le tube vertical 2 à fonction multiples

La chambre de traitement est équipée d'un tube vertical 2 à fonctions multiples. Dans la variante montrée, il peut assurer à la fois
- la ou les ventilations intermédiaires du lit fixe,
- l'accès au filtre 51-55,
- l'accès pour le rinçage éventuel du dispositif,
- la fonction de cage de positionnement de l'alarme 91-92 de disfonctionnement par obturation accidentelle du dispositif.

### Alarme passive

Une alarme passive utilisable dans le contexte de l'invention peut être composée d'un flotteur 92 et d'une tige verticale 91 d'alerte de montée des eaux anormales dans le dispositif.

Le dispositif est équipé de structures supports de bactéries permettant le développement de la biomasse qui les colonise, s'y fixe et s'y développe en génération spontanée.

Le lit fixe peut être composé exclusivement de matériaux naturels non biodégradables, inertes, stables et pérennes dans le temps.

Les matériaux qui le composent sont de préférences de forme sphérique ou toute autre forme permettant entre elles une circulation d'air et/ou d'eau.

Les matériaux qui le composent sont avantageusement de structure poreuse pour permettre une bonne absorption et une bonne rétention de l'eau dans les structures et mécaniquement résistante afin d'éviter leur tassement ou écrasement.

L'architecture spécifique du lit fixe aérobie apporte les spécificités et avantages suivants :
- exonère de tout risque de colmatage par une granulométrie et une densité adaptée,
- permet une parfaite répartition de l'écoulement de la charge hydraulique au travers des structures par un rapport de vide entre structures adapté,
- permet une bonne accroche de la biomasse par ses structures rugueuses,
- permet une régulation de la charge hydraulique par absorption partielle de l'eau grâce à ses structures poreuses.

L'architecture de la structure périphérique de la surface de répartition peut être caractérisée par un bord ou relief périphérique permettant et générant le retour sur le répartiteur de la charge hydraulique séquentielle non encore percolée lors du passage aller.

L'architecture de la structure périphérique de la surface de répartition peut être caractérisée par des canaux de répartition de l'eau perforés de forme ondulée.

Les perforations multiples de la surface de répartition sont de préférence caractérisées par un espacement et un diamètre d'ouverture permettant une bonne répartition de la charge hydraulique.

L'architecture de l'ensemble du dispositif d'oxygénation par ventilation multiple est assuré par
- ventilation verticale et horizontale unique ou multiples simultanées par le tube vertical 2,
- ventilation naturelle consécutive des espaces d'air disponible entre les structures du lit fixe,
- ventilation de l'eau lors de la dispersion par basculement alternatif de l'auget basculant,
- ventilations par une ou plusieurs zones d'oxygénation intermédiaire traversière.

Un tube vertical 2 à fonctions multiples est prévu de manière à assurer à la fois
- la ou les ventilations intermédiaires du lit fixe,
- l'accès au filtre 51-55,
- l'accès pour le rinçage éventuel du dispositif,
- la fonction de cage de positionnement de l'alarme 91-92 passive de disfonctionnement,

la fonction de cage de positionnement de la pompe de relevage 101 et de la tuyauterie de relevage 102 le cas échéant.

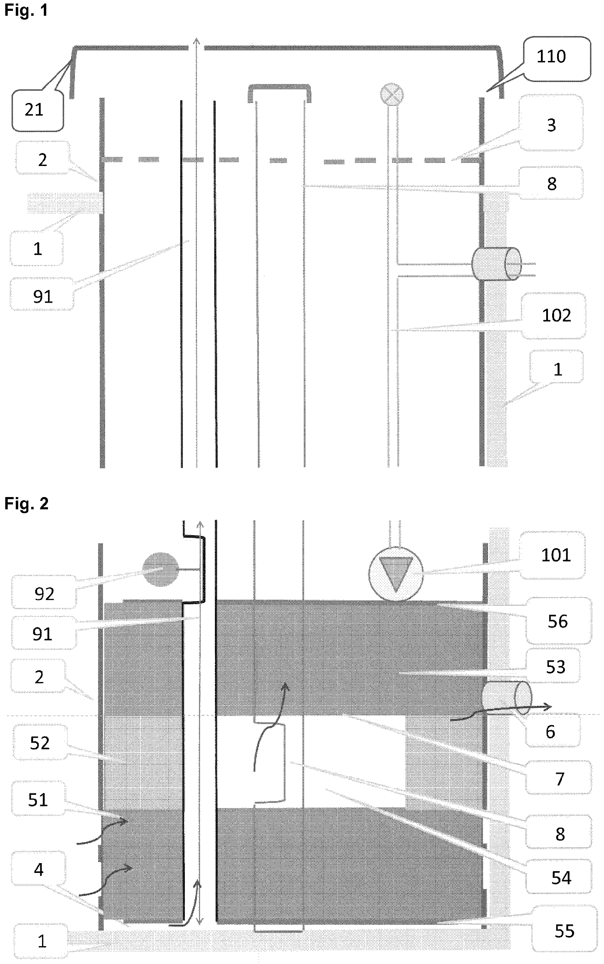

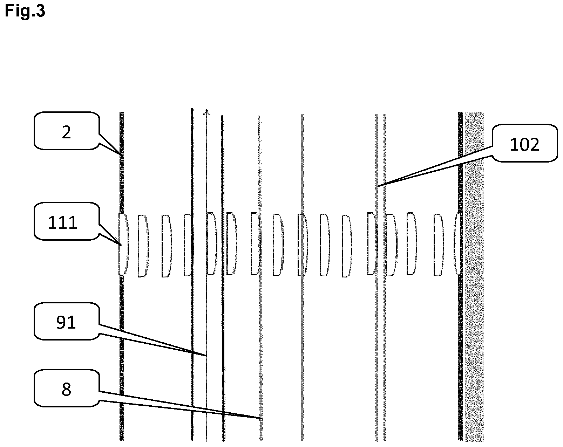

Les Fig. 1, 2 et 3 sont des coupes transversales d'un mode réalisation préféré, montrant une partie d'un dispositif d'assainissement des eaux usées, plus particulièrement la partie supérieure, inférieure et intermédiaire du tube vertical 2 installé dans le compartiment d'une cuve 1.

Le tube vertical 2 est monté dans le compartiment de la cuve 1 et comporte des ouvertures en partie basse près du fond de manière à former un espace de circulation 4. Le tube vertical peut être muni d'un couvercle, bouchon, clapet ou capuchon amovible 21. Plus particulièrement, si le tube vertical sert aussi de prise d'air extérieur 110, ce couvercle, bouchon, clapet ou capuchon 21 n'est évidemment pas étanche à l'air. Dans ce cas le tube vertical présente de préférence une ou plusieurs zones 111 avec des ouvertures, de préférence sur toute la périphérie, par exemple sous la forme de crépine.

Le filtre est installé dans cet exemple dans la partie inférieure devant l'évacuation des eaux épurées 6. Dans le cas d'un dispositif à compartiment à évacuation haute des eaux épurées, le filtre serait situé en haut du tube vertical 2. Le filtre dans l'exemple est composé de plusieurs parties pleines 51, 53 et creuse 52 pour former une cavité 54 au centre du filtre. Le filtre est maintenu par deux plateaux de blocage filtre inférieur 55 et supérieur 56.

Un tube de prélèvement 8 est prévu dans le tube vertical 2 de manière à pouvoir prendre des échantillons de l'eau épurée à l'intérieur de la cavité 54. Le tube de prélèvement peut être fermé en haut au moyen d'un couvercle, un bouchon, d'un clapet, etc.

La variante illustrée comprend de plus une alarme passive comprenant une tige verticale 91 reliée à un flotteur 92. En cas de montée du niveau hydraulique 7 indiquant par exemple le colmatage du filtre 51-54, le flotteur 92 fait monter la tige verticale 91 pouvant déclencher un voyant passif ou même un interrupteur relié à une alarme électrique, visuelle ou sonore.

La variante illustrée présente également une pompe de relevage 101 permettant de vidanger le compartiment du dispositif par la tuyauterie de relevage 102.

Les différents éléments peuvent être maintenus à l'intérieur du tube vertical 2 au moyen d'une barre de calage 3 ou similaire.

### Légende:

- 1: Cuve (paroi)
- 2: Tube vertical
- 21: Couvercle, bouchon, clapet ou capuchon du tube vertical
- 3: Barre de calage
- 4: Espace de circulation
- 51: Filtre plein
- 52: Filtre creux
- 53: Filtre plein
- 54: Cavité du filtre
- 55: Plateau de blocage filtre inférieur
- 56: Plateau de blocage filtre supérieur
- 6: Evacuation des eaux épurées (tuyauterie de rejet)
- 7: Niveau hydraulique
- 8: Conduite de prélèvement
- 91: Tige d'alarme
- 92: Flotteur
- 101: Pompe de relevage
- 102: Tuyauterie de relevage
- 110: Prise d'air externe
- 111: Orifices d'aération intermédiaire

## Revendications

1. Dispositif de traitement d'eau ou d'assainissement d'eaux usées comprenant une cuve (1) avec au moins un compartiment, le compartiment comprenant une arrivée des eaux et une évacuation des eaux épurées, l'évacuation des eaux épurées étant pourvue d'un filtre pour retenir les matières résiduaires dans le compartiment,
un tube vertical (2) agencé dans le compartiment, l'extrémité inférieure du tube vertical (2) présentant au moins une ouverture à proximité du fond du compartiment et l'extrémité supérieure du tube vertical est soit placée en dessous d'une trappe de visite de la cuve et donc accessible par la trappe de visite, soit directement accessible de l'extérieur auquel cas le tube vertical passe au travers du plafond de la cuve,
le filtre (51-56) étant disposé de manière amovible à l'intérieur du tube vertical (2) et l'évacuation des eaux épurées étant raccordée au tube vertical (2), **caractérisé en ce que** le filtre (51-56) comprend une cavité intérieure (54) entourée de milieu filtrant, **en ce que** le dispositif comprend en outre, à l'intérieur du tube vertical (2), une conduite verticale de prélèvement (8) d'eaux épurées dont l'extrémité ouverte inférieure se trouve à l'intérieur de la cavité intérieure (54) du filtre et dont l'extrémité supérieure ouverte se trouve à hauteur de l'extrémité supérieure du tube vertical (2) accessible soit de l'extérieur de la cuve, soit par la trappe de visite.

2. Dispositif de traitement d'eau ou d'assainissement d'eaux usées selon la revendication 1, dans lequel le filtre amovible (51-56) est muni d'une barre de levage.

3. Dispositif de traitement d'eau ou d'assainissement d'eaux usées selon la revendication 2, dans lequel la conduite verticale (2) de prélèvement d'eaux épurées fait également office de barre de levage pour le filtre.

4. Dispositif de traitement d'eau ou d'assainissement d'eaux usées selon l'une quelconque des revendications 1 à 3, dans lequel l'extrémité supérieure du tube vertical peut être fermée de manière étanche à l'air ou non par un couvercle, un bouchon, un clapet ou un capuchon (21).

5. Dispositif de traitement d'eau ou d'assainissement d'eaux usées selon l'une quelconque des revendications 1 à 4, dans lequel le tube vertical (2) est posé ou fixé sur le fond du compartiment et comporte des ouvertures à proximité de l'extrémité inférieure, de préférence des ouvertures sur toute la périphérie du tube vertical.

6. Dispositif de traitement d'eau ou d'assainissement d'eaux usées selon l'une quelconque des revendications 1 à 5, comprenant en outre, à l'intérieur du tube vertical (2), une alarme passive comprenant une tige verticale (91) pourvue d'un flotteur (92), la tige verticale (91) étant adaptée pour se déplacer verticalement en fonction du niveau hydraulique dans le tube vertical (2), de préférence la tige verticale (91) est agencée à l'intérieur d'une conduite ou cage de positionnement (8).

7. Dispositif de traitement d'eau ou d'assainissement d'eaux usées selon l'une quelconque des revendications 1 à 6, dans lequel une pompe de relevage des eaux est montée à l'intérieur du tube vertical (2).

8. Dispositif de traitement d'eau ou d'assainissement d'eaux usées selon l'une quelconque des revendications 1 à 7, dans lequel l'extrémité supérieure du tube vertical (2) n'est pas étanche à l'air et a accès à l'atmosphère libre pour pouvoir servir de prise d'air (110) pour la ventilation du compartiment ou de la cuve, le tube vertical comprenant en outre des ouvertures de ventilation supplémentaires à l'intérieur de la cuve (1) ou du compartiment.

9. Dispositif de traitement d'eau ou d'assainissement d'eaux usées selon la revendication 8, dans lequel le compartiment est un compartiment à fonctionnement par percolation comprenant un lit microbiologique à plusieurs couches de supports microbiologiques interrompues par une ou plusieurs zone(s) d'oxygénation intermédiaire(s) et le tube vertical (2) comprenant des ouvertures de ventilation supplémentaires à hauteur de cette ou de ces zone(s) d'oxygénation intermédiaire(s) à l'intérieur du compartiment.

10. Procédé de fabrication de dispositifs de traitement d'eau ou d'assainissement d'eaux usées selon l'une quelconque des revendications 1 à 9, comprenant l'intégration d'un tube vertical (2) pourvu d'un filtre amovible (51-56) dans un compartiment de la cuve (1) des dispositifs.

11. Procédé de contrôle ou de maintenance d'un dispositif de traitement d'eau ou d'assainissement d'eaux usées selon l'une quelconque des revendications 1 à 9, comprenant le contrôle ou le remplacement du filtre amovible (51-56), le prélèvement d'échantillons ou la vidange du compartiment.

## Patentansprüche

1. Vorrichtung zur Wasseraufbereitung oder Abwasserklärung, umfassend einen Behälter (1) mit mindestens einer Kammer, wobei die Kammer eine Wasserzuleitung und eine Ableitung für gereinigtes Wasser umfasst, wobei die Ableitung für gereinigtes Wasser mit einem Filter versehen ist, um Reststoffe in der Kammer zurückzuhalten,
eine vertikale Röhre (2), die in der Kammer angeordnet ist, wobei das untere Ende der vertikalen Röhre (2) mindestens eine Öffnung in der Nähe des Bodens der Kammer aufweist und das obere Ende der vertikalen Röhre entweder unter einer Inspektionsklappe des Behälters angeordnet und somit über die Inspektionsklappe zugänglich ist oder, falls die vertikale Röhre sich durch die Decke des Behälters erstreckt, unmittelbar von außen zugänglich ist,
wobei der Filter (51-56) derart angeordnet ist, dass er sich herausnehmbar im Inneren der vertikalen Röhre (2) befindet, und die Ableitung für gereinigtes Wasser an die vertikale Röhre (2) angeschlossen ist,
**dadurch gekennzeichnet, dass** der Filter (51-56) einen inneren Hohlraum (54) umfasst, der von einem filtrierenden Medium umgeben ist, dadurch, dass die Vorrichtung darüber hinaus, im Inneren der vertikalen Röhre (2) eine vertikale Leitung (8) zum Entnehmen von gereinigtem Wasser umfasst, deren unteres offenes Ende sich im Inneren des inneren Hohlraums (54) des Filters befindet und deren oberes offenes Ende sich auf Höhe des oberen Endes der vertikalen Röhre (2) befindet, welches entweder von außerhalb des Behälters oder über die Inspektionsklappe zugänglich ist.

2. Vorrichtung zur Wasseraufbereitung oder Abwasserklärung nach Anspruch 1, bei welcher der herausnehmbare Filter (51-56) mit einer Hebestange versehen ist.

3. Vorrichtung zur Wasseraufbereitung oder Abwasserklärung nach Anspruch 2, bei welcher die vertikale Leitung (2) zum Entnehmen von gereinigtem Wasser zugleich als Hebestange für den Filter dient.

4. Vorrichtung zur Wasseraufbereitung oder Abwasserklärung nach einem beliebigen der Ansprüche 1 bis 3, bei welcher das obere Ende der vertikalen Röhre mittels eines Deckels, eines Stopfens, einer Klappe oder einer Kappe (21) derart geschlossen werden kann, dass es luftdicht ist oder nicht.

5. Vorrichtung zur Wasseraufbereitung oder Abwasserklärung nach einem beliebigen der Ansprüche 1 bis 4, bei welcher die vertikale Röhre (2) auf dem Boden der Kammer aufliegt oder daran befestigt ist, wobei sie Öffnungen in der Nähe des unteren Endes aufweist, wobei die Öffnungen vorzugsweise auf dem gesamten Umfang der vertikalen Röhre vorhanden sind.

6. Vorrichtung zur Wasseraufbereitung oder Abwasserklärung nach einem beliebigen der Ansprüche 1 bis 5, wobei sie darüber hinaus, im Inneren der vertikalen Röhre (2), ein passives Warnelement umfasst, welches einen vertikalen Stab (91) umfasst, der mit einem Schwimmer (92) versehen ist, wobei der vertikale Stab (91) dafür geeignet ist, sich vertikal in Abhängigkeit vom Wasserstand in der vertikalen Röhre (2) zu bewegen, wobei der vertikale Stab (91) vorzugsweise im Inneren eines Leitorgans oder eines Haltekäfigs (8) angeordnet ist.

7. Vorrichtung zur Wasseraufbereitung oder Abwasserklärung nach einem beliebigen der Ansprüche 1 bis 6, bei welcher im Inneren der vertikalen Röhre (2) eine Wasserhebepumpe angebracht ist.

8. Vorrichtung zur Wasseraufbereitung oder Abwasserklärung nach einem beliebigen der Ansprüche 1 bis 7, bei welcher das obere Ende der vertikalen Röhre (2) nicht luftdicht ist und Zugang zur freien Atmosphäre hat, damit es als Lufteinlass (110) für die Belüftung der Kammer oder des Behälters dienen kann, wobei die vertikale Röhre darüber hinaus, im Inneren des Behälters (1) oder der Kammer, zusätzliche Belüftungsöffnungen umfasst.

9. Vorrichtung zur Wasseraufbereitung oder Abwasserklärung nach Anspruch 8, bei welcher die Kammer einer Kammer entspricht, die mittels Perkolation betrieben wird, wobei sie ein mikrobiologisches Bett mit mehreren Schichten aus mikrobiologischen Trägerstoffen umfasst, welche von einem oder mehreren dazwischenliegenden Sauerstoffzufuhrbereich(en) unterbrochen werden, und wobei die vertikale Röhre (2) auf Höhe dieses/dieser im Inneren der Kammer dazwischenliegenden Sauerstoffzufuhrbereiche(s) zusätzliche Belüftungsöffnungen umfasst.

10. Verfahren zur Herstellung von Vorrichtungen zur Wasseraufbereitung oder Abwasserklärung nach einem beliebigen der Ansprüche 1 bis 9, wobei es den Einbau einer vertikalen Röhre (2), welche mit einem herausnehmbaren Filter (51-56) versehen ist, in eine Kammer des Behälters (1) der Vorrichtung umfasst.

11. Verfahren zum Überprüfen oder Warten einer Vorrichtung zur Wasseraufbereitung oder Abwasserklärung nach einem beliebigen der Ansprüche 1 bis 9, wobei es das Überprüfen oder das Austauschen des herausnehmbaren Filters (51-56), das Entnehmen von Proben oder das Entleeren der Kammer umfasst.

## Claims

1. An apparatus for treating water or purifying wastewater comprising a tank (1) having at least one compartment, the compartment comprising a water inlet and a purified water outlet, the purified water outlet being provided with a filter for retaining residual materials in the compartment, a vertical tube (2) arranged in the compartment, the lower end of the vertical tube (2) having at least one opening close to the bottom of the compartment and the upper end of the vertical tube either being located below a tank access hatch and therefore accessible via the access hatch or being directly accessible from the outside, in which case the vertical tube passes through the ceiling of the tank,
the filter (51-56) being removably accommodated inside the vertical tube (2) and the purified water outlet being connected to the vertical tube (2), **characterised in that** the filter (51-56) comprises an internal cavity (54) surrounded by filter medium, **in that** the device furthermore comprises, inside the vertical tube (2), a vertical duct (8) for sampling purified water, the open lower end of which is located inside the internal cavity (54) of the filter and the open upper end of which is located at the level of the upper end of the vertical tube (2) accessible either from outside the tank or via the access hatch.

2. An apparatus for treating water or purifying wastewater according to claim 1, in which the removable filter (51-56) is equipped with a lifting bar.

3. An apparatus for treating water or purifying wastewater according to claim 2, in which the vertical duct (2) for sampling purified water likewise acts as a lifting bar for the filter.

4. An apparatus for treating water or purifying wastewater according to any one of claims 1 to 3, in which the upper end of the vertical tube may be closed in airtight or non-airtight manner by a lid, stopper, valve or cap (21).

5. An apparatus for treating water or purifying wastewater according to any one of claims 1 to 4, in which the vertical tube (2) is set down on or fixed to the bottom of the compartment and comprises openings close to the lower end, preferably openings over the entire periphery of the vertical tube.

6. An apparatus for treating water or purifying wastewater according to any one of claims 1 to 5 furthermore comprising, inside the vertical tube (2), a passive alarm comprising a vertical stem (91) provided with a float (92), the vertical stem (91) being capable of moving vertically as a function of the water level in the vertical tube (2), the vertical stem (91) preferably being arranged inside a positioning duct or cage (8).

7. An apparatus for treating water or purifying wastewater according to any one of claims 1 to 6, in which a water lifting pump is fitted inside the vertical tube (2).

8. An apparatus for treating water or purifying wastewater according to any one of claims 1 to 7, in which the upper end of the vertical tube (2) is not airtight and has access to the free atmosphere in order to be able to serve as an air inlet (110) for ventilating the compartment or tank, the vertical tube furthermore comprising additional ventilation openings inside the tank (1) or compartment.

9. An apparatus for treating water or purifying wastewater according to claim 8, in which the compartment is a percolation compartment comprising a microbiological bed of multiple layers of microbiological supports interrupted by one or more intermediate oxygenation zone(s), the vertical tube (2) comprising additional ventilation openings at the level of this or these intermediate oxygenation zone(s) inside the compartment.

10. A method for manufacturing apparatuses for treating water or purifying wastewater according to any one of claims 1 to 9 comprising fitting a vertical tube (2) provided with a removable filter (51-56) in a compartment of the tank (1) of the apparatuses.

11. An inspection or maintenance method for an apparatus for treating water or purifying wastewater according to any one of claims 1 to 9, comprising inspecting or replacing the removable filter (51-56), taking samples or draining the compartment.
